# EUROPEAN PATENT APPLICATION

(11) **EP 2 632 080 A1**
(43) Date of publication of application: **28.08.2013**
(21) Application number: 12157170.7
(22) Date of filing: 27.02.2012
(51) Int. Cl.: H04L 12/18, H04L 12/58

(54) **System to communicate messages locally**

(71) Applicant: Mycelium S.A., 1645 Luxembourg (LU)
(72) Inventor: Kuzmin, Alexander, 143442 Moskow (RU)
(74) Representative: Röggla, Harald

(57) **Abstract**

A System (10) to communicate messages, which system (10) comprises at least a device (1; D1 to D12) to transmit a message and a further device (1; D1 to D12) in the wireless transmission range (TR1) of the device (1; D1 to D12) to receive the message, wherein the device (1; D1 to D12) comprises transmission means (6) to transmits a time stamp of the message to limit the transmission lifetime of the message in the system (1) to a maximal lifetime and to transmit a transmission counter of the message to limit the number of retransmissions of the message from one device (1; D1 to D12) to another device (1; D1 to D12) to a maximal length of a retransmission chain, and wherein the further device (1; D1 to D12) comprises decision means (7) to decide to resend the received message with an increased or decreased transmission counter to other devices (1; D1 to D12) of the system (1) in its wireless transmission range (TR1), if the spread of the message is within the maximal lifetime of the message and the number of retransmissions of the message is within the maximal length of the retransmission chain.

## Description

### FIELD OF THE INVENTION

The present invention relates to a system communicating messages. This system comprises at least one device transmitting a message and a further device in the wireless transmission range of the system to receive a message.

### BACKGROUND OF THE INVENTION

Such system is known from conventional radio transmission where voice messages may be transmitted from one radio transmitter device to another in its wireless transmission range. As the transmission range is limited by the transmission power of the radio transmitter device and may be in addition limited by geographic circumstances between the sending and receiving radio transmitter devices, only a very limited number of devices will get the message.

A different kind of system is known from SMS text messages sent from one mobile device to another. In this system the mobile device sends the SMS message wirelessly to the next mobile antenna mast and further via the telephone network to another mobile antenna mast close by the receiving mobile. In this system messages have to be addressed by the telephone number for a particular receiver.

Furthermore ZigBee is known as a low power wireless network standard based on IEEE 802.15.4. ZigBee systems comprise three different types of devices: ZigBee coordinator (ZC); ZigBee router (ZR) and ZigBee devices (ZED). The most capable device, the coordinator forms the root of the network tree and might bridge to other networks. There is exactly one ZigBee coordinator in each network since it is the device that started the network originally. The ZC is able to store information about the network, including acting as the trust center & repository for security keys. As well as running an application function, a router can act as an intermediate router, passing on data from other devices. A ZED contains just enough functionality to talk to the parent node (either the coordinator or a router); it cannot relay data from other devices. This relationship allows the node to be asleep a significant amount of the time thereby giving long battery life. A ZED requires the least amount of memory, and therefore can be less expensive to manufacture than a ZR or ZC. This known ZigBee system has the disadvantage that the administrative overhead and number of devices needed to set-up such a ZigBee system is too high for all kind of different applications.

### SUMMARY OF THE INVENTION

It is an objective of the present invention to provide a system to communicate messages to several or all devices within an adjustable limited geographical area. This objective is achieved with a system where the device comprises transmission means to transmit a time stamp of the message to limit the transmission lifetime of the message in the system to a maximal lifetime and to transmit a transmission counter of the message to limit the number of retransmissions of the message from one device to another to a maximal length of a retransmission chain, and that the further device comprises decision means to decide to resend the received message with an increased or decreased transmission counter to other devices of the system in its wireless transmission range, if the spread of the message is within the maximal lifetime of the message and the number of retransmissions of the message is within the maximal length of the retransmission chain.

This system provides the advantage that a user can limit the spread of his message by a number of retransmissions. As the wireless transmission range of a device is limited by its transmission power the number of retransmissions limits the distance messages can travel. This geographical limitation of a message is combined with a lifetime of a message where a user may decide to send a message to all devices locally around, but only within the next e.g. 10 minutes or 3 hours or 2 weeks. Only the combination of these two limitations enables an effective local spread of a message to devices around.

This system provides the advantage that the devices of the system can be realized with very limited power consumption, as each device only needs a very limited wireless transmission range, while the messages still can travel over long distances. To ensure that messages stay in the area of interest they get cut-off by the transmission counter and the maximal lifetime. Based on this system all kind of applications may be realized.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows three different embodiments of devices to communicate messages.
Figure 2 shows a block diagram of such a device of figure 1.
Figure 3 shows how the device of figure 1 may be bent to harvest power.
Figure 4 shows a system of several devices to communicate messages.

### DETAILED DESCRIPTION OF EMBODIMENTS

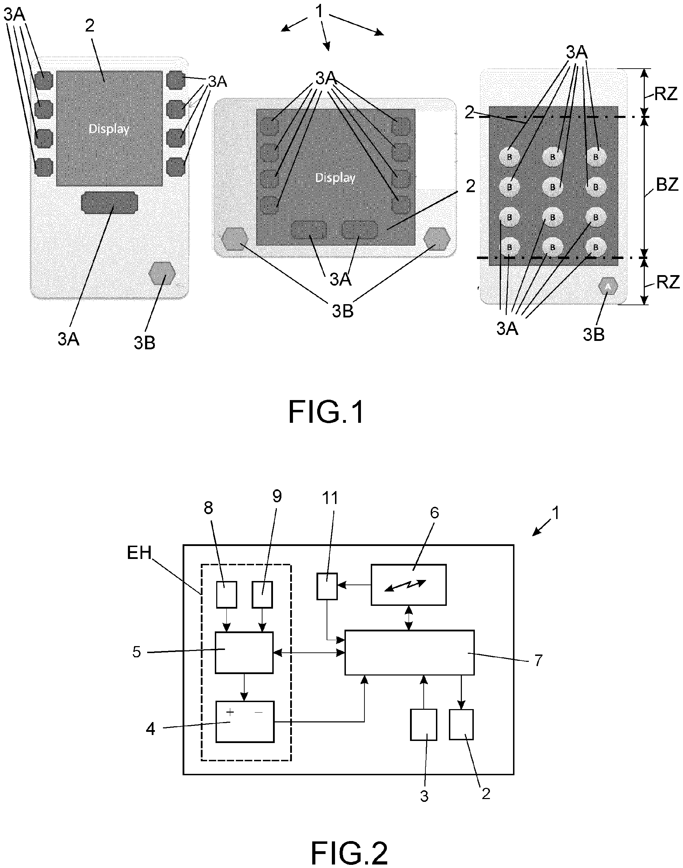

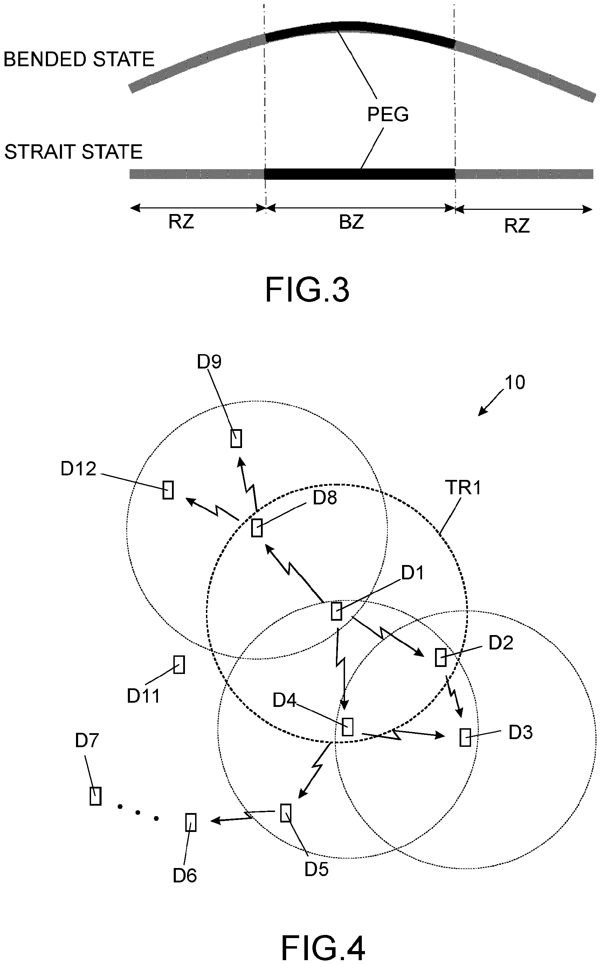

Figure 1 shows the top view of the layout of three different embodiments of devices 1 to communicate messages in a system shown in figure 4. The devices 1 are of credit card size and are able to transmit/receive messages. The term "messages" has to be interpreted in a broad way and includes at least text messages and graphics (e.g. bitmaps, photos) and videos and sound. The devices 1 comprise a display 2 and input means realized as keys 3A and 3B. In the embodiments of the device 1 in figure 1 the keys 3A are realized as touch sensitive capacitive buttons and the keys 3B are realized as mechanical buttons. The keys 3B do not require power and are used to wake-up the devices 1 from a low power consumption mode into an active power consumption mode. The keys 3A on the display area can be realized on the active surface of the display 1 as:
1) Surface touch sensitive area,
2) Predefined segmented touch capacitive areas,
3) Projected touch sensitive areas.
Keys 3A furthermore can be realized under the active surface of the display 1 as:
1. Mechanical buttons placed in the predefined areas,
2. Buttons consisting of bulk piezoelectric material, where the voltage spikes during the deformation of a piezoelectric generator PEG are treated by a controlling system similarly to pressing of a mechanical button, what will be explained in more detail below.

In the block diagram of figure 2 functional blocks of the device 1 are shown which include an energy harvesting system EH that comprises a power storage unit 4 and a power management unit 5 and the device 1 furthermore comprises transmitter/receiver means 6. A user of the device 1 may use the keys 3A to type in messages and operate the menu. The device 1 furthermore comprises a micro controller 7 for running a dedicated software code permitting all the operations executed by the user and explained below.

The power management unit 5 of the device 1 controls the charging of the power storage unit 4 and the spending of the energy stored in the power storage unit 4 and the voltage conditioning for the power supply of other components of the device 1. The device 1 is built in a way to be powered without external power supply and therefore does not comprise a power supply connector. To realize that, the device 1 comprises a solar panel 8 on their front and/or back side and a piezoelectric generator 9 that generates energy when the device 1 is bent/twisted by a user or hit by a user against a freestanding surface. The energy harvesting system EH of device 1 therefore consists of:
1. the solar panel 8 connected directly to the power management unit 5
2. the piezoelectric generator 9 that comprises bulk material of a piezoelectric transducer, which transforms mechanical movement during bending of the device 1 or hitting of the device 1 against a rigid surface into voltage spikes,
3. a voltage conditioning electrical circuit
4. the power storage unit 4.

To generate energy in the device 1 the piezoelectric generator 9 is realized in a bendable zone BZ of the device 1, while the voltage/current conditioning circuit and the power management unit 5 with the power storage unit 4 are placed in a rigid zone RZ of the device 1. One example of the distribution of the rigid zones RZ and the bending zone BZ of the device 1 are shown in figure 1 and figure 3. As the display 2 of the device 1 is realized as a flexible display 2 in the bending zone BZ above the piezoelectric generator PEG, the device 1 can be easily bent or twisted by the user. The rigid zones RZ of the device 1 are not bendable and accomodate all the other subsystems of the device 1 which are less sustainable to the mechanical stress. This has the advantage that these subsystems of the device 1 are not exposed to a mechanical stress while the device 1 is bent during the energy harvesting process.

The man skilled in the art knows further technologies to load the power storage unit 4 like for instance an electromagnetic generator to generate power by shaking the device known from pocket lamps. This technology to harvest energy is in particular useful for devices 1 with a larger and thicker form factor as a smart card.

To save power the micro controller 7 runs a power management program that steers the power management unit 5 of the device 1 into a low power mode in which mode the device 1 employs a polling receiver strategy to listen to incoming announcements. In order to receive a full message and to transmit a message, the micro controller 7 activates an active mode of the power management unit 5 in which the device 1 sends a large number of announcements. Announcements are short packets of data describing the message itself. There is a high probability that a polling receiver device 1 in the wireless transmission range will be in the active mode when at least one of the announcements is broadcast, and it may decide to switch to the active mode to receive the message body. Essentially, sending a message "wakes up" the devices 1 in the wireless transmission range of the transmitting device 1.

The micro controller 7 furthermore disables the keys 3A of the input means in case the power left in the power storage unit 4 enables only a predefined minimal number of final actions to transmit and/or to receive and display messages. The micro controller 7 for instance will disable the keys 3A to type in further messages or to manage the menu of the device 1 in case the power left in the power storage unit 4 enables only to display three further messages with the display 2. These last remaining three messages are foreseen for reasons of public safety and emergency situations.

In case a user wants to input a message with the device 1 s/he types the text of the message using the keys 3A. The device 1 furthermore enables the user to input data to limit the geographical area and the lifetime of the message. The menu of the user interface of the device 1 asks the user how many times the message should be retransmitted by devices 1 and how long the lifetime of the message should be. As an example the user may input that the message should be retransmitted only ten times and the lifetime for these retransmissions of the message should be 30 minutes.

The micro controller 7 of the device 1 generates a time stamp to fix the time the message was sent first time. The transmitter/receiver means 6 is set-up to transmit the time stamp of the message to limit the transmission lifetime of the message in the system to a maximal lifetime and the transmission counter of the message to limit the number of retransmissions of the message from the device 1 to another to a maximal length of the retransmission chain of ten transmissions in this example. As the clocks of the devices 1 are not synchronized the time stamp of a message is realized as follows. Each message has a time stamp that stores the seconds since the first transmission. The device 1 forwarding the message increases the time stamp by the time difference between receiving the message and re-broadcasting it (measured by the card's local clock). This realization has the advantage that it works without a global system time. The term time stamp has to be interpreted in a broad way to fulfill the functions as explained above.

The micro controller 7 of the further device 1 that receives the announcement of the message is set-up to form decision means to decide whether or not to activate the receiver of the device 1 to receive the full message. The micro controller 7 furthermore decides whether or not to resend the received message with a decreased transmission counter to other devices 1 of the system in its wireless transmission range, if the spread of the message is within the maximal lifetime of the message and the number of retransmissions of the message is within the maximal length of the retransmission chain. In above example the maximal transmission counter is set as a number by the user in the device 1 where the message is created and the transmission counter therefore is decreased by each device 1 that retransmits the message. In case the decision means evaluate that the transmission counter of the message received is already zero, then the decision means will decide that this message in this chain of transmission reached its maximal retransmissions and will not retransmit the message any further.

In a further embodiment the decision means may add further information to decide whether or not to retransmit the message. Such further information may include:
- Was the message already retransmitted by other devices 1 in the transmission range of the device 1 after the device 1 received the message the first time?
- What was the signal strength of the signal with which the message was received?
- How much power is left in the power storage unit 4?

Based on this further information the decision means for instance may decide not to retransmit the message first time received earlier in case another device 1 already retransmitted the received message with a high signal strength, what means that this other device 1 is close by and will have a similar transmission range.

Figure 4 shows such a system 10 to communicate a message from a device D1, where the message was created by a user, to other devices D2 to D12 in the local geographical area of device D1. All devices D1 to D12 are set-up as devices 1 explained with figures 1 to 3. As an example of an application of the system 10 the user of device D1 stands at the front of a football station where a match will start in 30 minutes and he wants to sell his two tickets. To inform other people locally around the stadium about his offer the user types into his device D1 the message "I have two stadium tickets to sell for 30$ each. Meet me at the meeting point (red cap on)". The user limits the lifetime of this message to 40 minutes and sets a transmission counter to 100 and presses the transmit button of the device D1.

Further devices D2, D4 and D8 are in the wireless transmission range TR1 of e.g. 20 meters of the device D1 and will receive the announcement of the message. The announcement comprises the information that device D1 sends a text message and the transmission lifetime still is 40 minutes and the transmission counter is 100. This announcement is received by the devices D2, D4 and D8 and the decision means of these devices D2, D4 and D8 decide to activate the active mode, to receive the text message and to display it and to retransmit the message to other devices D3, D5, D9 and D12 in their wireless transmission ranges with a transmission counter of 99. As there are no further devices in the wireless transmission range of devices D3, D9 and D12, these transmission chains end for the moment. The transmission chain of the message from devices D1 to D4 to D5 is extended to device D6 and further all in all 100 devices each in the wireless transmission range of the one before until the message is received with the transmission counter of zero at device D7. Here this transmission chain ends as the maximal length of retransmissions was reached.

This method to communicate the message of two tickets for sale from device D1 to the other devices in the local area around the stadium provides an easy way to communicate to other users that are close enough to the offer and might be interested to buy these tickets. Other known methods to communicate like SMS messaging or just standing there with a poster to announce the sale of the tickets would not work at all or would not work as efficient as with the devices.

In a more advanced system 1 the devices D1 to D12 use the further information to decide whether or not to retransmit the message as explained before. This has the advantage that not every device retransmits each message what could lead to fact that the whole bandwidth would be clogged by the same message needlessly repeated thousands of times. Both devices D2 and D4 for instance receive the same message of D1 at more or less the same time. In case the decision means of device D4 decide to retransmit the message, D2 would again receive the same message, or at least its announcement, as first time received from device D1 and therefore would decide not to retransmit it. This frees-up bandwidth for other messages and saves power of the device D2.

Due to the power management and the relatively small wireless transmission ranges the devices 1 work with very little power consumption. The solar panel 8 at the back recharges the power storage unit 4 whenever there is daylight or indoor light and if there is a need to recharge during night hours the user may bend or twist the device or its dedicated surface against a freestanding surface to recharge via the built-in piezoelectric generator PEG.

In above embodiment the devices 1 comprise means 11 to estimate the distance to neighboring devices 1 in the wireless transmission range and the decision means use this estimate of the distance as a further information to decide whether or not to activate the active power mode to receive the message and/or whether or not to retransmit the announcement and/or the message to other devices. Such means 11 to estimate the distance to neighboring devices may be realized by a sensor that senses the amplitude of the carrier of other devices in the wireless transmission range. As such range measurement requires the transmission of multiple packages it increases the power consumption of the devices 1. Therefore this feature is only realized in devices 1 that are used for special applications.

To save power the devices D3, D9 and D12 stopped to transmit announcements, as there were no further devices in their wireless transmission range during an initial time period (e.g. 10 seconds). As the users of these devices D3, D9 and D12 and users of other devices are moving around this may change. While the message is still within the maximal lifetime the transmission means 6 restart the transmission of the announcement after a given retransmission time period that for instance could be every two minutes. In another embodiment the devices D3, D9 and D12 could first evaluate whether there is another device in their wireless transmission ranges and restart to transmit the announcements only if there is another device that could receive their announcements. This has the advantage that the devices 1 save power and that the message during the maximal lifetime of the message is spread as far as possible.

As the devices 1 are cheap, they may be handed out as loyalty cards from vendors or at the entrance of bars or concerts. If not personalized by the user for a special application the devices are all identical and do not exchange a temporary or permanent device network address to ensure anonymity of the devices and their users. This reduces the network communication overhead and ensures privacy in applications where needed. In such an application an anonymous chat in a bar using the devices 1 may be started with another person in the bar and if both are interested both may join for a drink. In another application the devices handed out in a showroom may be used for spontaneous questions to the audience.

A system to communicate messages may furthermore comprise gateway devices. A gateway device is a stationary device connected to a power supply and to a data link realized by e.g. a connection to Internet or another IP network. The gateway device has a much larger power budget and implements transmission means with a different wireless protocol and a different power saving strategy. In one example a department store chain may send a message about a new special offer via the Internet to their stores worldwide. Gateway devices may be located at the entrance and/or on different floors of the stores and immediately or based on a time information timed later on start to transmit announcements about the message (including a transmission counter and lifetime of the message) of the special offer to devices 1 in the wireless transmission area of the gateway device. All customers that walk along the entrance of the stores and all customers within the stores worldwide get the message. It is particularly advantageous that the message is transmitted to further devices 1 to potential customers locally around the stores or in the stores as long as the message is still within its lifetime and the transmission chain did not reach its maximum. This way of transmitting messages enables a whole range of new applications.

Gateway devices could be used as relay stations as well to enable the users of the cards to transmit messages to long distance destinations. A gateway station could comprise receiving means that receive the messages sent by the devices 1. If a user with a device 1 gets close to the gateway device the gateway device will receive the message from the device 1 and via e.g. the Internet transmission channel transmit it to a gateway device e.g. in India and the USA to send out the message there. Users of devices 1 that walk within the wireless transmission range of these gateway devices will receive the message and spread it in those countries. It all depends on the transmission counter and the lifetime of the message set how far such messages can travel.

In a further application, users of devices 1 may personalize their devices 1 to clarify that they want to join a group or news group. Devices 1 may already be preconfigured with that information or other users may want to personalize their device 1 that they are not interested to receive messages from a special group or with a special content specified in the announcements. Devices 1 for kids may be preconfigured not to receive messages marked by the sender as containing adult content. All this kind of data to personalize the device 1 may be input and stored in the device 1 as meta data that are used by the decision means to decide which messages announced in announcements receive should be received and displayed. A user may not personalize his device 1 in a way that some or all announcements and messages are not retransmitted if they are still within their lifetime and the transmission counter is not zero. This ensures that all devices 1 carried around by users act as retransmission devices 1 to spread messages as far as possible.

Certain applications may require trusted communication between the parties, in particular, confidentiality, authentication, message integrity and non-repudiation. To personalize a device 1 for such transmissions a key pair is generated by the device that can be used for asymmetric cryptography, message encryption, decryption and signature.

A man skilled in the art realizes that there is an enormous amount of different applications that can be realized with the system 10 to communicate messages as explained above. The devices 1 may be realized in all kind of form factors like e.g. a watch, a feature of a mobile; a calculator; a USB stick. The power budget of these devices may be quite different what may lead to different features enabled or wireless protocols used. Devices 1 may be equipped with a GPS receiver to enable further applications.

The transmission counter may be counted from zero to maximum per each transmission or from maximum to zero what leads to an increment or decrement per transmission.

In another application customers of a retail chain are issued with flexible ISO-sized cards as devices 1 capable of:
- displaying messages on the screen;
- receiving messages by radio;
- when prompted by a gateway transceiver, the card authenticates and in case of successful authentication the card broadcasts a unique customer ID.

The gateway devices may be located in the showroom, possibly in vicinity of certain shelves. They periodically prompt the cards in their vicinity, and the cards respond with the customer ID. After looking up the customer database (and possibly the database of the customer's previous purchases), the retailer may offer a personalized discount specifically for the customer whose card has responded to any of the transceivers. The choice of items on sale for which this discount is offered can be affected by the location of the customer in the show room (estimated via the received signal strength from the customer's card at different gateway devices). If the customer stands near a particular shelf, it may indicate that the customer is specifically interested in the items displayed on the shelf.

The gateway devices broadcast the personalized discount for the customer (tied to the customer ID reported by the smart discount card). The message with the discount offer is shown on the screen of the customer's card immediately (but discarded by all other cards). The user can see the personalized discount offer before the check-out (and even before walking away from the shelf). Personalized discounts can be different to those offered to all customers, because the shopping history of an individual can strongly indicate whether he/she is likely to buy a certain item at the full price.

A similar scheme is run by several retail chains offline, with personalized discount coupons sent to the customers per post. The customer, however, has to study the coupon book before going to the shop, cut out the relevant coupons, and take them to the shop. This requires certain concentration and effort from the customer, which many customers are not willing to spend. These kinds of applications may be realized with a system to communicate messages as explained above.

## Claims

1. System (10) to communicate messages, which system (10) comprises at least a device (1; D1 to D12) to transmit a message and a further device (1; D1 to D12) in the wireless transmission range (TR1) of the device (1; D1 to D12) to receive the message, **characterized in, that**
the device (1; D1 to D12) comprises transmission means (6) to transmits a time stamp of the message to limit the transmission lifetime of the message in the system (1) to a maximal lifetime and to transmit a transmission counter of the message to limit the number of retransmissions of the message from one device (1; D1 to D12) to another device (1; D1 to D12) to a maximal length of a retransmission chain, and that
the further device (1; D1 to D12) comprises decision means (7) to decide to resend the received message with an increased or decreased transmission counter to other devices (1; D1 to D12) of the system (1) in its wireless transmission range (TR1), if the spread of the message is within the maximal lifetime of the message and the number of retransmissions of the message is within the maximal length of the retransmission chain.

2. System (1) according to claim 1,
wherein the device (1; D1 to D12) communicates with further devices (1; D1 to D12) in its wireless transmission range (TR1) without the exchange of temporary or permanent device network addresses to ensure anonymity of the devices (1; D1 to D12).

3. System (1) according to any of the preceding claims,
wherein the transmission means (6) of the device (1; D1 to D12) transmit the time stamp and the transmission counter of the message together with a message description as an announcement of the message to all further devices (1; D1 to D12) in its wireless transmission range (TR1) and wherein the decision means of these further devices (1; D1 to D12) decide based upon the received announcement whether or not to receive the message and/or whether or not to re-transmit the announcement and/or the message to other devices (1; D1 to D12).

4. System (1) according to claim 3,
wherein the transmission means (6) of the device (1; D1 to D12) stop the transmission of the announcement of the message to be transmitted in case no further device (D2 to D12) is within the wireless transmission range (TR1) to receive the message during a given initial transmission time period and wherein the transmission means (6) in such a case restart the transmission of the announcement after a given retransmission time period.

5. System (1) according to any of the preceding claims,
wherein a device of the system comprises input means (3A, 3B) to input and activate transmission of a message and/or to input meta data to link the message and/or the device (1; D1 to D12) to a group and/or wherein the device (1; D1 to D12) comprises display means (2) to display a message and wherein the decision means of the device (1; D1 to D12) decide upon the meta data in the announcement whether or not to receive the message and in particular whether or not to display the message.

6. System (1) according to any of the preceding claims,
wherein the device (1; D1 to D12) comprises a power management unit (5) that controls the charging of a power storage unit (4) and the spending of energy stored in the power storage unit (4) and wherein the device (1; D1 to D12) comprises a processing unit (7) to disable the input means (3A) in case the energy left in the power storage unit (4) enables only a predefined minimal number of final actions to transmit and/or to receive and display messages.

7. System (1) according to any of the preceding claims,
wherein the system (1) comprises a gateway device to receive a message from the device (1; D1 to D12) and retransmit it via one or all of the following transmission channels to further gateway devices and/or servers: Internet; telephone network; data communication via power cables; and
which one or more further gateway devices retransmit the message to other devices (1; D1 to D12) in their wireless transmission range (TR1).

8. Device (1; D1 to D12) to transmit messages to a further device (1; D1 to D12) in its wireless transmission range (TR1), **characterized in, that**
the device (1; D1 to D12) comprises the means with the functions of the device (1; D1 to D12) of the system (1) according to any of the claims 1 to 7.

9. Device (1; D1 to D12) according to claim 8, **characterized in, that** the device (1; D1 to D12) comprises no external power supply connection and is powered by any or all of the following power generation systems: photovoltaic panel; piezoelectric generator to generate power by bending, twisting the device or by hitting with a dedicated edge of the device against an independent surface.

10. Device (1; D1 to D12) according to claim 8 or 9, **characterized in, that** the device (1; D1 to D12) comprises means (11) to estimate the distance to neighboring devices (1; D1 to D12) in the wireless transmission range (TR1) and that the decision means use this estimate of the distance as a further information to decide whether or not to activate the active power mode to receive the message and/or whether or not to retransmit the announcement and/or the message to other devices (1; D1 to D12).

11. Device (1; D1 to D12) according to any of the claims 8 to 10, **characterized in, that** the device (1; D1 to D12) comprises security means to store certificates and/or public keys and/or key pairs and/or symmetric keys to enable a secure chain of trust exchange of secure messages between devices (1; D1 to D11) of the system (1) with matching certificates.

12. Device (1; D1 to D12) according to any of the claims 8 to 11, **characterized in, that** the device (1; D1 to D12) comprises at least one bendable zone (BZ), that houses a piezoelectric generator (PEG) that generates voltage spikes if bended, and which device (1; D1 to D12) comprises at least one rigid zone (BZ), that is mechanical stable compared to the bendable zone (BZ) and that houses subsystems of the device (1; D1 to D12) that are less sustainable to mechanical stress.

13. Device (1; D1 to D12) according to any of the claim 12, **characterized in, that** the device (1; D1 to D12) houses a flexible display (2) in the bendable zone (BZ) and a power management unit (5) and/or a power storage unit (4) in the rigid zone (RZ).

14. Method to communicate a message from a device (1; D1 to D12) to further devices (1; D1 to D12), **characterized in** the following steps:
the device (1; D1 to D12) transmits a time stamp of the message to limit the transmission lifetime of the message to a maximal lifetime and the device (1; D1 to D12) further transmits a transmission counter of the message to limit the number of retransmissions of the message from one device (1; D1 to D12) to another to a maximal length of a retransmission chain;
the further devices (1; D1 to D12) receive the time stamp and transmission counter of the message and decide to resend the received message with an increased or decreased transmission counter to other devices (1; D1 to D12) in their wireless transmission range (TR1), if the spread of the message is within the maximal lifetime of the message and the number of retransmissions of the message is within the maximal length of the retransmission chain.

15. Method according to claim 14, **characterized in that** during the communication of the devices (1; D1 to D12) no temporary or permanent device network addresses are exchanged to ensure anonymity of the devices.

## Amended claims

### Amended claims in accordance with Rule 137(2) EPC.

**1.** System (10) to communicate messages, which system (10) comprises at least a device (1; D1 to D12) to transmit a message and a further device (1; D1 to D12) in the wireless transmission range (TR1) of the device (1; D1 to D12) to receive the message, wherein the device (1; D1 to D12) comprises transmission means (6) to transmit a time stamp of the message to limit the transmission lifetime of the message in the system (1) to a maximal lifetime and to transmit a transmission counter of the message to limit the number of retransmissions of the message from one device (1; D1 to D12) to another device (1; D1 to D12) to a maximal length of a retransmission chain, and
the further device (1; D1 to D12) comprises decision means (7) to decide to resend the received message with an increased or decreased transmission counter to other devices (1; D1 to D12) of the system (1) in its wireless transmission range (TR1), if the spread of the message is within the maximal lifetime of the message and the number of retransmissions of the message is within the maximal length of the retransmission chain,
**characterized in, that**
the transmission means (6) are set-up to transmit a large number of announcement packets before the message, and that
the further device (1; D1 to D12) is set-up to employ a polling receiver strategy whereby it preserves energy by only waking up from a low power mode periodically to listen to incoming announcements and deciding whether and when to switch to active mode to receive the message body, and that
the decision means (7) are set-up to utilize additional information to decide whether or not to retransmit the message, which information may include one or more of the following: the number of other devices (1; D1 to D12) that have been observed to have re-transmitted this message; the signal strength(s) of the signal with which the message and/or its announcements have been received in any of the observed transmissions of the message; and how much power is left in a power storage unit (4) of the further device (1; D1 to D12).

**2.** System (10) according to claim 1,
wherein the device (1; D1 to D12) communicates with further devices (1; D1 to D12) in its wireless transmission range (TR1) without the exchange of temporary or permanent device network addresses to ensure anonymity of the devices (1; D1 to D12).

**3.** System (10) according to any of the preceding claims,
wherein the transmission means (6) of the device (1; D1 to D12) transmit the time stamp and the transmission counter of the message together with a message description as an announcement of the message to all further devices (1; D1 to D12) in its wireless transmission range (TR1) and wherein the decision means of these further devices (1; D1 to D12) decide based upon the received announcement whether or not to receive the message and/or whether or not to re-transmit the announcement and/or the message to other devices (1; D1 to D12).

**4.** System (10) according to claim 3,
wherein the transmission means (6) of the device (1; D1 to D12) stop the transmission of the announcement of the message to be transmitted in case no further device (D1 to D12) is within the wireless transmission range (TR1) to receive the message during a given initial transmission time period and wherein the transmission means (6) in such a case restart the transmission of the announcement after a given retransmission time period.

**5.** System (10) according to any of the preceding claims,
wherein a device of the system comprises input means (3A, 3B) to input and activate transmission of a message and/or to input meta data to link the message and/or the device (1; D1 to D12) to a group and/or wherein the device (1; D1 to D12) comprises display means (2) to display a message and wherein the decision means of the device (1; D1 to D12) decide upon the meta data in the announcement whether or not to receive the message and in particular whether or not to display the message.

**6.** System (10) according to any of the preceding claims,
wherein the device (1; D1 to D12) comprises a power management unit (5) that controls the charging of a power storage unit (4) and the spending of energy stored in the power storage unit (4) and wherein the device (1; D1 to D12) comprises a processing unit (7) to disable the input means (3A) in case the energy left in the power storage unit (4) enables only a predefined minimal number of final actions to transmit and/or to receive and display messages.

**7.** System (10) according to any of the preceding claims,
wherein the system (1) comprises a gateway device to receive a message from the device (1; D1 to D12) and retransmit it via one or all of the following transmission channels to further gateway devices and/or servers: Internet; telephone network; data communication via power cables; and
which one or more further gateway devices retransmit the message to other devices (1; D1 to D12) in their wireless transmission range (TR1).

**8.** Device (1; D1 to D12) to transmit messages to a further device (1; D1 to D12) in its wireless transmission range (TR1), **characterized in, that**
the device (1; D1 to D12) comprises the transmission means (6) and the decision means (7) with the functions of the devices (1; D1 to D12) of the system (10) according to any of the claims 1 to 7.

**9.** Device (1; D1 to D12) according to claim 8, **characterized in, that** the device (1; D1 to D12) comprises no external power supply connection and is powered by any or all of the following power generation systems: photovoltaic panel; piezoelectric generator to generate power by bending, twisting the device or by hitting with a dedicated edge of the device against an independent surface.

**10.** Device (1; D1 to D12) according to claim 8 or 9, **characterized in, that** the device (1; D1 to D12) comprises means (11) to estimate the distance to neighboring devices (1; D1 to D12) in the wireless transmission range (TR1) and that the decision means use this estimate of the distance as a further information to decide whether or not to activate the active power mode to receive the message and/or whether or not to retransmit the announcement and/or the message to other devices (1; D1 to D12).

**11.** Device (1; D1 to D12) according to any of the claims 8 to 10, **characterized in, that** the device (1; D1 to D12) comprises security means to store certificates and/or public keys and/or key pairs and/or symmetric keys to enable a secure chain of trust exchange of secure messages between devices (1; D1 to D11) of the system (1) with matching certificates.

**12.** Device (1; D1 to D12) according to any of the claims 8 to 11, **characterized in, that** the device (1; D1 to D12) comprises at least one bendable zone (BZ), that houses a piezoelectric generator (PEG) that generates voltage spikes if bended, and which device (1; D1 to D12) comprises at least one rigid zone (BZ), that is mechanical stable compared to the bendable zone (BZ) and that houses subsystems of the device (1; D1 to D12) that are less sustainable to mechanical stress.

**13.** Device (1; D1 to D12) according to any of the claim 12, **characterized in, that** the device (1; D1 to D12) houses a flexible display (2) in the bendable zone (BZ) and a power management unit (5) and/or a power storage unit (4) in the rigid zone (RZ).

**14.** Method to communicate a message from a device (1; D1 to D12) to further devices (1; D1 to D12), wherein
the device (1; D1 to D12) transmits a time stamp of the message to limit the transmission lifetime of the message to a maximal lifetime and the device (1; D1 to D12) further transmits a transmission counter of the message to limit the number of retransmissions of the message from one device (1; D1 to D12) to another to a maximal length of a retransmission chain;
the further devices (1; D1 to D12) receive the time stamp and transmission counter of the message and decide to resend the received message with an increased or decreased transmission counter to other devices (1; D1 to D12) in their wireless transmission range (TR1), if the spread of the message is within the maximal lifetime of the message and the number of retransmissions of the message is within the maximal length of the retransmission chain, **characterized in** the following further steps:
the device (1; D1 to D12) transmits a large number of announcement packets before the message; and
the further devices (1; D1 to D12) employ a polling receiver strategy whereby they preserve energy by only waking up periodically to listen to incoming announcements and deciding whether and when to switch to active mode to receive the message body, and the further devices utilize additional information to decide whether or not to retransmit the message,
which information may include one or more of the following: the number of other devices (1;
D1 to D12) that have been observed to have re-transmitted this message; the signal strength(s) of the signal with which the message and/or its announcements have been seen and/or
received in any of the observed transmissions of the message; and how much power is left in the power storage unit (4).

**15.** Method according to claim 14, **characterized in that** during the communication of the devices (1; D1 to D12) no temporary or permanent device network addresses are exchanged to ensure anonymity of the devices.
